# EUROPÄISCHE PATENTSCHRIFT

(11) **EP 2 531 745 B1**
(45) Veröffentlichungstag und Bekanntmachung des Hinweises auf die Patenterteilung: **20.11.2013**
(21) Anmeldenummer: 10787410.9
(22) Anmeldetag: 02.12.2010
(51) Int. Cl.: F16F 9/04

(54) **LUFTFEDEREINRICHTUNG EINES SCHIENENFAHRZEUGES**
PNEUMATIC SPRING DEVICE FOR A RAIL VEHICLE
DISPOSITIF À RESSORT PNEUMATIQUE D'UN VÉHICULE FERROVIAIRE

(30) Priorität: 03.02.2010 DE 102010000290
(43) Veröffentlichungstag der Anmeldung: 12.12.2012
(73) Patentinhaber: ContiTech Luftfedersysteme GmbH, 30165 Hannover (DE)
(72) Erfinder: GEDENK, Volker, 30966 Hemmingen (DE); HESSE, Bernd, 30880 Laatzen (DE)
(86) Internationale Anmeldenummer: PCT/EP2010/068705
(87) Internationale Veröffentlichungsnummer: WO 2011/095242

(56) Entgegenhaltungen:
- EP-A1- 1 593 873
- DE-A1- 2 108 694
- SU-A1- 1 333 911
- US-A- 5 382 006
- US-A1- 2007 257 409

## Beschreibung

Die Erfindung betrifft eine Luftfedereinrichtung eines Schienenfahrzeuges mit einem zwischen gefederter Karosserie (Wagenkasten) und ungefedertem Fahrwerksteil (Fahrwerk) angeordnetem Luftfederbalg, welcher mit im Balgmaterial eingebetteten Festigkeitsträgern als Verstärkungselemente versehen ist, wobei einzelne oder mehrere Lagen von Festigkeitsträgern oder Gewebelagen aus Festigkeitsträgern vorgesehen sein können. Der Luftfederbalg weist an beiden Enden einen Wulstring zur Befestigung bzw. Einspannung des Luftfederbalges an entsprechend ausgebildeten Anschlagringen (Felgenhörnern) von Karosserie und ungefedertem Fahrwerksteil auf, wobei der Wulstring mit einem Kern versehen ist und die Festigkeitsträger den Kern umschlingen oder umgreifen, d.h. üblicherweise mit einem gewissen Abstand um den Kern herum geführt sind.

Luftfederungen/ Luftfedereinrichtung mit Luftfederbälgen, die besondere Ausbildungen der Wulstringe und der Umschlingung durch die Festigkeitsträger aufweisen, sind im Stand der Technik vielfach bekannt.

Ein Problem der Befestigung bzw. Einspannung des Luftfederbalges an den Anschlagringen bzw. Felgenhörnern des Wagenkastens oder des Fahrwerks besteht im Auffangen der relativ stark ausgeprägten Bewegungen einer solchen Luftfederung. Luftfederungen für Schienenfahrzeuge müssen im Gegensatz zu Luftfedern bei Kraftfahrzeugen starke vertikale, horizontale und torsionale Bewegungen aufnehmen. Dadurch entstehen im Bereiche der Einspannungen Relativbewegungen, die zu starkem Verschleiß der Luftfeder führen können.

Dies birgt insbesondere dann Nachteile, wenn das Verstärkungsgewebe, d.h. die Festigkeitsträger nahe der Oberfläche der Luftfeder und damit an den Enden der Luftfeder auch im Bereich der Einspannung und nahe an den Felgenhörnern angeordnet sind. Wird durch Relativbewegungen das Oberflächenmaterial der in der Regel aus Gummi bestehenden Luftfeder einem starken Reibverschleiß unterworfen, so kann es auch zur Schädigung der Festigkeitsträger kommen. Eine Gegenmaßnahme ist das Aufbringen zusätzlicher Gummischichten, was aber die Herstellung verteuert und auch keine grundlegende Abhilfe schafft.

Die starke ausgeprägten vertikalen, horizontalen und torsionalen Bewegungen können auch dazu führen, dass die Festigkeitsträger geschädigt werden und die Kraftübertragung zwischen Kern und Festigkeitsträgern nicht mehr ausgeprägt ist.

DE 40 11 517 A1 offenbart hierzu einen Luftfederbalg für Schienenfahrzeuge, der eingebettete Verstärkungslagen oder Festigkeitsträger aufweist und mit Ringwülsten versehen ist, welche mit je einem innenliegenden Kernring verstärkt sind. In dem zwischen Wulstring, hier als "Ringwulst" bezeichnet, und Anschlagring sich ausbildenden Einspann- bzw. Anlagebereich ist der Luftfederbalg an den Anschlagring anvulkanisiert. Dadurch werden Bewegungen zwischen der Balgoberfläche und dem in aller Regel metallischen Anschlagring verhindert und demzufolge ein Abrieb des Balgmaterials vermieden. Nachteilig hierbei ist die relativ aufwendige Herstellung solcher vulkanisierter Verbindungen.

Die DE 21 08 694 C2 offenbart zur Verbesserung der Resistenz gegen starke vertikale, horizontale und torsionale Bewegungen eine Optimierung der Verbindung von Festigkeitsrägern und Kern durch eine besondere, länglich abgerundete Formgebung des Kerns und einer entsprechend sich ausbildenden Umschlingung durch die Festigkeitsträger. Das oben genannte Problem des Abriebs ist damit jedoch noch nicht gelöst.

Für die Erfindung bestand also die Aufgabe, eine für ein Schienenfahrzeug geeignete Luftfedereinrichtung bereitzustellen, die auch bei hohen Belastungen und starken Bewegungen zwischen Wagenkastens und Fahrwerks sicher und verschleißfrei arbeitet und die einfach und ohne zusätzliche Bearbeitungen herzustellen ist.

Gelöst wird diese Aufgabe durch die Merkmale des Hauptanspruchs. Weitere vorteilhafte Ausbildungen sind in den Unteransprüchen offenbart.

Dabei weist der Wulstring einen Kern aus zwei separat im Wulstring positionierten Kernringen auf, wobei die Festigkeitsträger S-förmig zwischen den Kernringen hindurchgeführt sind und letztere umschlingen. Das erlaubt eine sichere Einbettung und Kraftübertragung auf die Festigkeitsträger. Insbesondere dadurch, dass auf einen langen "Umschlag", d.h. auf eine nach Umschlingung eines Kernes lange und parallel laufende Rückführung der Festigkeitsträger verzichtet werden kann, gibt die erfindungsgemäße Lösung genügend Freiraum für die Einbettung der Festigkeitsträger in einer Weise, die möglichst wenige Schädigungen durch Überlastung zulässt.

Eine vorteilhafte Weiterbildung besteht darin, dass, ausgehend vom Mittelteil des Luftfederbalges, der Einlauf der Festigkeitsträger in die S-förmige Umschlingung der Kernringe vom zwischen Wulstring und Anschlagring sich ausbildenden Einspannbereich entfernt erfolgt. Auf diese Weise werden zusätzlich Schädigungen durch Reibverschleiß im Kontaktbereich zwischen Luftfeder und Anschlagring/Felgenhom minimiert

Eine weitere vorteilhafte Ausbildung besteht darin, dass die S-förmige Umschlingung der Kernringe so erfolgt, dass letztere durch eine in den Festigkeitsträgern entstehende Zugspannung, "zusammengezogen" werden, d.h. unter Klemmung der Festigkeitsträger gegeneinander verspannt werden. Dadurch verstärken Zugbelastungen in den Festigkeitsträgern die Klemmung und erlauben damit eine erhöhte und sichere Kraftübertragung auf die Kernringe.

Eine weitere vorteilhafte Ausbildung besteht darin, dass mindestens einer der Kernringe als Wickelkern ausgebildet ist. Durch eine solche Ausführung, bei der z.B. zur Bildung des Kernquerschnitts ein Faden mehrfach um den Balgrohling herum gewickelt wird, wurden bereits bei Versuchen gleich hohe Platzdrücke erzielt wie mit dem herkömmlichen Stahlkern. Damit erreicht man also eine besonders einfache Herstellung bei gleichbleibender Dichtungsqualität. Der Wickelfaden kann aus z. B. Kunststoffbestehen oder auch aus Metall, d.h. aus dünnem Draht.

Besonders geeignet ist die erfindungsgemäße Luftfederung, wie bereits einleitend dargestellt, für ein Schienenfahrzeug.

Anhand eines Ausführungsbeispieles soll die Erfindung näher erläutert werden. Es zeigen
- Fig. 1: den vorderen Teil eines schienengebundenen Kurzstrecken-Triebwagens
- Fig. 2: eine erfindungsgemäße Luftfedereinrichtung in einer vergrößerten Schnittdarstellung
- Fig. 3: den unteren und am ungefederten Fahrgestell befestigten Wulstring des Luftfederbalges einer erfindungsgemäßen Luftfedereinrichtung
- Fig. 4: den oberen und an der Karosserie befestigten Wulstring des Luftfederbalges einer erfindungsgemäßen Luftfedereinrichtung

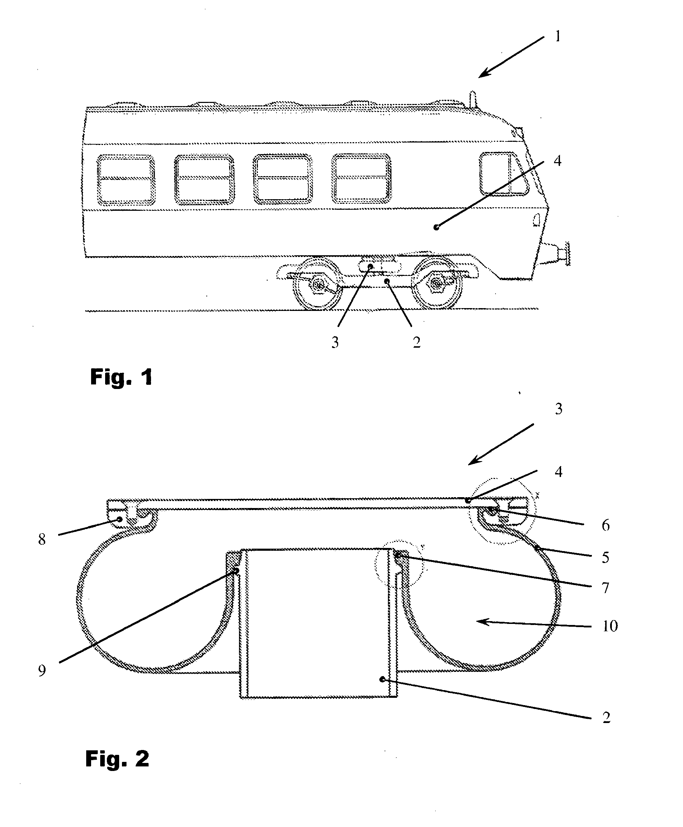

Fig. 1 zeigt den vorderen Teil eines schienengebundenen Kurzstrecken-Triebwagens 1 mit einen Fahrschemel bzw. Fahrgestell 2, welches über eine erfindungsgemäße Luftfedereinrichtung 3 mit der Karosserie 4 des Triebwagens 1 verbunden ist.

Fig. 2 zeigt die Luftfedereinrichtung 3 in einer vergrößerten Schnittdarstellung. Hier erkennt man den zwischen gefederter Karosserie 4 und ungefedertem Fahrwerksteil angeordnetem Luftfederbalg 5, welcher mit im Balgmaterial eingebetteten Festigkeitsträgern versehen ist und an beiden Enden einen Wulstring 6, 7 zur Einspannung des Luftfederbalges an entsprechend ausgebildeten Anschlagringen 8, 9 von Karosserie 4 und ungefedertem Fahrwerksteil, d.h. Fahrgestell 2 aufweist.

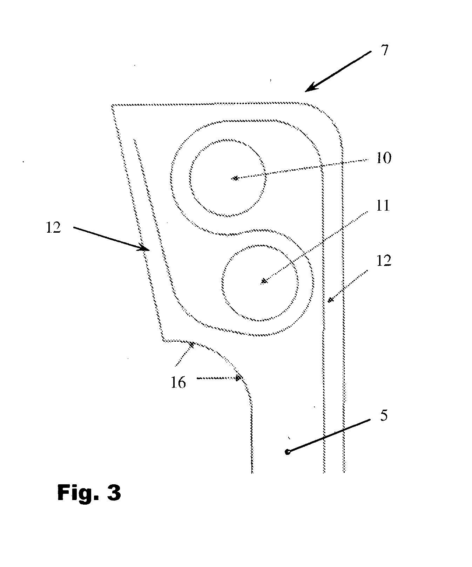

Fig. 3 zeigt den unteren und am ungefederten Fahrgestell 2 befestigten Wulstring 7 des Luftfederbalges 5 in einer weiter vergrößerten Schnittdarstellung. Der Wulstring 7 ist mit einen Kern aus zwei separat im Wulstring positionierten Kernringen 10 und 11 versehen, wobei die Festigkeitsträger 12 S-förmig zwischen den Kernringen 10 und 11 hindurchgeführt sind und letztere umschlingen.

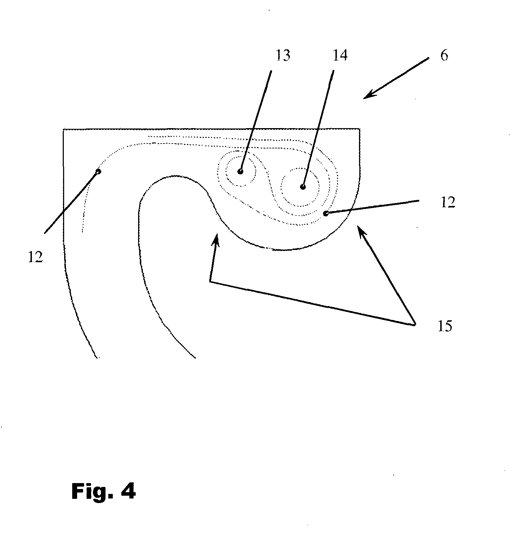

Fig. 4 zeigt den oberen und an der Karosserie 4 befestigten Wulstring 6 des Luftfederbalges 5 in einer vergrößerten Schnittdarstellung. Auch der Wulstring 6 ist mit einen Kern aus zwei separat im Wulstring positionierten Kernringen 13 und 14 versehen, wobei die Festigkeitsträger 12 S-förmig zwischen den Kernringen 13 und 14 hindurchgeführt sind und letztere umschlingen.

In der den Fig.3 und 4 erkennt man auch, dass ausgehend vom Mittelteil des Luftfederbalges 5, der Einlauf der Festigkeitsträger 12 in die S-förmige Umschlingung der Kernringe 10, 11, 13, 14 vom zwischen Wulstring 6, 7 und Anschlagring 8, 9 sich jeweils ausbildenden Einspannbereich 15, 16 entfernt erfolgt.

### Bezugszeichenliste

### (Teil der Beschreibung)

- 1: Kurzstrecken-Triebwagen
- 2: Fahrgestell
- 3: Luftfedereinrichtung
- 4: Karosserie
- 5: Luftfederbalg
- 6: Wulstring
- 7: Wulstring
- 8: Anschlagring
- 9: Anschlagring
- 10: Kernring
- 11: Kernring
- 12: Festigkeitsträger
- 13: Kernring
- 14: Kernring
- 15: Einspannbereich
- 16: Einspannbereich

## Patentansprüche

1. Luftfedereinrichtung (3) eines Schienenfahrzeuges (1) mit einem zwischen gefederter Karosserie (4) und ungefedertem Fahrwerksteil (2) angeordnetem Luftfederbalg (5), welcher mit im Balgmaterial eingebetteten Festigkeitsträgern (12) versehen ist und an beiden Enden einen Wulstring (6, 7) zur Einspannung des Luftfederbalges an entsprechend ausgebildeten Anschlagringen (8, 9) von Karosserie (4) und ungefedertem Fahrwerksteil (2) aufweist, wobei der Wulstring (6, 7) mit einem Kern versehen ist und die Festigkeitsträger den Kern umschlingen, **dadurch gekennzeichnet, dass** der Wulstring (6, 7) einen Kern aus zwei separat im Wulstring positionierten Kernringen (10, 11, 13, 14) aufweist, wobei die Festigkeitsträger (12) S-förmig zwischen den Kernringen hindurchgeführt sind und letztere umschlingen.

2. Luftfedereinrichtung nach Anspruch 1, bei der, ausgehend vom Mittelteil des Luftfederbalges, der Einlauf der Festigkeitsträger (12) in die S-förmige Umschlingung der Kernringe (10, 11, 13, 14) vom zwischen Wulstring (6, 7) und Anschlagring (8, 9) sich ausbildenden Einspannbereich entfernt erfolgt.

3. Luftfedereinrichtung nach Anspruch 1 oder 2, bei der die S-förmige Umschlingung der Kernringe (10, 11, 13, 14) so erfolgt, dass letztere durch eine in den Festigkeitsträgern (12) entstehende Zugspannung unter Klemmung der Festigkeitsträger gegeneinander verspannt werden.

4. Luftfedereinrichtung nach einem der Ansprüche 1 bis 3, bei der mindestens einer der Kernringe (10, 11, 13, 14) als Wickelkern ausgebildet ist.

5. Schienenfahrzeug mit einer Luftfederung nach einem der Ansprüche 1 bis 4.

## Claims

1. Pneumatic spring device (3) for a rail vehicle (1), comprising a pneumatic spring bellows (5) which is arranged between sprung bodywork (4) and an unsprung running gear part (2), is provided with reinforcements (12) embedded in the bellows material and, at both ends, has a bead ring (6, 7) for clamping the pneumatic spring bellows against correspondingly designed stop rings (8, 9) of the bodywork (4) and unsprung running gear part (2), wherein the bead ring (6, 7) is provided with a core, and the reinforcements loop around the core, **characterized in that** the bead ring (6, 7) has a core made of two core rings (10, 11, 13, 14) positioned separately in the bead ring, wherein the reinforcements (12) are guided in an S-manner between the core rings and loop around the latter.

2. Pneumatic spring device according to Claim 1, in which, starting from the central part of the pneumatic spring bellows, the reinforcements (12) enter into the S-shaped looping around of the core rings (10, 11, 13, 14) at a distance from the clamping region formed between the bead ring (6, 7) and stop ring (8, 9).

3. Pneumatic spring device according to Claim 1 or 2, in which the S-shaped looping around of the core rings (10, 11, 13, 14) takes place in such a manner that the latter are braced against one another, with the reinforcements being clamped, by means of a tensile stress arising in the reinforcements (12).

4. Pneumatic spring device according to one of Claims 1 to 3, in which at least one of the core rings (10, 11, 13, 14) is designed as a winding core.

5. Rail vehicle with a pneumatic spring system according to one of Claims 1 to 4.

## Revendications

1. Dispositif à ressort pneumatique (3) d'un véhicule ferroviaire (1), comprenant un soufflet de ressort pneumatique (5) disposé entre une carrosserie suspendue (4) et une partie de train de roulement non suspendue (2), lequel soufflet de ressort pneumatique est pourvu de renforts (12) encastrés dans le matériau du soufflet et comprend aux deux extrémités un anneau formant bourrelet (6, 7) pour serrer le soufflet de ressort pneumatique contre des bagues de butée (8, 9), réalisées de manière correspondante, de la carrosserie (4) et de la partie de train de roulement non suspendue (2), l'anneau formant bourrelet (6, 7) étant pourvu d'un noyau et les renforts entourant le noyau, **caractérisé en ce que** l'anneau formant bourrelet (6, 7) comprend un noyau constitué de deux bagues de noyau (10, 11, 13, 14) positionnées séparément dans l'anneau formant bourrelet, les renforts (12) étant guidés en forme de S entre les bagues de noyau et entourant ces dernières.

2. Dispositif à ressort pneumatique selon la revendication 1, dans lequel, à partir de la partie centrale du soufflet de ressort pneumatique, l'entrée des renforts (12) dans l'enroulement en forme de S autour des bagues de noyau (10, 11, 13, 14) s'effectue à distance de la région de serrage se formant entre l'anneau formant bourrelet (6, 7) et la bague de butée (8, 9).

3. Dispositif à ressort pneumatique selon la revendication 1 ou 2, dans lequel l'enroulement en forme de S autour des bagues de noyau (10, 11, 13, 14) s'effectue de telle sorte que ces dernières soient serrées les unes contre les autres, avec serrage des renforts, au moyen d'une contrainte de traction se produisant dans les renforts (12).

4. Dispositif à ressort pneumatique selon l'une quelconque des revendications 1 à 3, dans lequel au moins l'une des bagues de noyau (10, 11, 13, 14) est réalisée sous forme de noyau d'enroulement.

5. Véhicule ferroviaire comprenant une suspension pneumatique selon l'une quelconque des revendications précédentes.
